**Europäisches Patentamt**

**European Patent Office**

**Office européen des brevets**

(11) Veröffentlichungsnummer: **0 438 069 A2**

# EUROPÄISCHE PATENTANMELDUNG

(21) Anmeldenummer: 91100187.3

(51) Int. Cl.5: **B23G 5/06**

(22) Anmeldetag: 08.01.91

(30) Priorität: **19.01.90 DE 4001481**

(43) Veröffentlichungstag der Anmeldung:
**24.07.91 Patentblatt 91/30**

(84) Benannte Vertragsstaaten:
**AT BE CH DE DK ES FR GB GR IT LI LU NL SE**

(71) Anmelder: **Emuge-Werk Richard Glimpel,
Fabrik für Präzisionswerkzeuge, vormals
Moschkau & Glimpel
Nürnberger Strasse 100
W-8560 Lauf/Pegnitz(DE)**

(72) Erfinder: **Glimpel, Helmut, Dipl.Ing.
Gartenstrasse 6
W-8560 Lauf a.d. Pegnitz(DE)**

(74) Vertreter: **Böhme, Volker, Dipl.-Ing. et al
Patentanwälte Dipl.-Ing. E. Kessel Dipl.Ing. V.
Böhme Karolinenstrasse 27
W-8500 Nürnberg 1(DE)**

(54) **Gewindebohrer mit Hinterschliff.**

(57) Es gibt einen Gewindebohrer, dessen Gewindepartie 2 ein Schneidteil 5 sowie ein Führungsteil 6 bildet und an mehreren benachbarten Gewindezähnen des Schneidteiles 5 mit einem Hinterschliff 8 versehen ist. Dabei ist es erwünscht, wenn für den Gewindebohrer eine weitere Bearbeitungsmaßnahme angegeben ist, durch die sich günstige Kompromisse bezüglich Führung und Reibung erzielen lassen.

Dies ist erreicht, indem sich der Hinterschliff 8 der benachbarten Schneidteil 5-Gewindezähne - in Längsrichtung gesehen - im Freiwinkel zunehmend oder abnehmend ändert. Durch die Änderung des Hinterschliffs lassen sich die Forderungen bezüglich Vermeidung des Verschneidens und Vermeidung des reibundsbedingten Kaltschweißens in verbesserter Weise erfüllen und aufeinander abstimmen.

Fig.5

# GEWINDEBOHRER MIT HINTERSCHLIFF

Die Erfindung betrifft einen Gewindebohrer, dessen Gewindepartie ein Schneidteil sowie ein Führungsteil bildet, im wesentlichen zylindrisch ist und an mehreren benachbarten Gewindezähnen des Schneidteiles mit einem Hinterschliff versehen ist, dessen Freiwinkel auf den Gewindezahn mit dem maximalen Flankendurchmesser bezogen ist.

Bei einem bekannten (DE-PS 32 26 355) Gewindebohrer dieser Art ist der Hinterschliff der benachbarten Schneidteil-Gewindezähne - in Längsrichtung gesehen - im Freiwinkel gleichbleibend. Wenn der Hinterschliff klein gehalten ist, so sind die Führungseigenschaften wenig beeinträchtigt und ist die Reibung bzw. die Gefahr des Kaltschweißens ralativ groß. Wenn der Hinterschliff groß gehalten ist, so sind die Führungseigenschaften merklich beeinträchtigt und ist die Reibung bzw. die Gefahr des Kaltschweißens relativ klein. Um die gegensätzlichen Forderungen bezüglich Führungseigenschaften und Reibung besser erfüllen zu können, wird dem Gewindebohrer über die Gewindepartie hin eine Verjüngung gegeben. Die Verjüngung darf jedoch nur ein geringes Ausmaß haben, da sonst das erzeugte Gewinde Profilfehler aufweisen kann.

Eine Aufgabe der Erfindung ist es, für einen Gewindebohrer der eingangs genannten Art eine weitere Bearbeitungsmaßnahme, durch die sich günstige Kompromisse bezüglich Führung und Reibung erzielen lassen, anzugeben. Der erfindungsgemäße Gewindebohrer ist, diese Aufgabe lösend, dadurch gekennzeichnet, daß sich der Hinterschliff der benachbarten Schneidteil-Gewindezähne - in Längsrichtung gesehen - im Freiwinkel zunehmend oder abnehmend ändert.

Durch die Änderung des Hinterschliffs lassen sich die Forderungen bezüglich Vermeidung des Verschneidens und Vermeidung des reibungsbedingten Kaltschweißens in verbesserter Weise erfüllen und aufeinander abstimmen. Der variable Hinterschliff ermöglicht verbesserte Kompromisse zwischen einer Verbesserung der Schneideigenschaften und noch brauchbaren Führungseigenschaften.

Unter einer zylindrischen Gewindepartie wird hier eine Gewindepartie mit oder ohne Verjüngung verstanden. Mit "Hinterschliff" ist noch nur der Flankenhinterschliff, sondern auch der Profilhinterschliff gemeint, bei dem die Gewindezähne an den Flanken und außen hinterschliffen sind. Der Gewindebohrer ist z.B. in geeigneter Weise genutet oder ist ein Gewindebohrer ohne Nuten, d.h. ein Gewindefurcher, bei dem der Zahn durch die Profilierung bestimmt ist. Die Größe des Hinterschliffs läßt sich statt durch den Freiwinkel auch durch den "Hub" ausdrücken. Unter "Hub" oder "Hinterschliffgröße" wird hier das Maß der durch das Hinterschleifen erzeugten Materialabtragung verstanden, das in einem vorbestimmten, für alle Gewindezähne gleichen Abstand vom Beginn des hinterschliffenen Bereiches bzw. der Materialabtragung feststellbar ist.

Es ist denkbar, die Hinterschliff-Änderung nur über einen Teil der Länge des Schneidteiles vorzusehen, das über die gesamte Länge mit Hinterschliff versehen ist. Besonders zweckmäßig und vorteilhaft ist es jedoch, wenn die Hinterschliff-Änderung sich über die gesamte Länge des Schneidteiles erstreckt. Hierdurch sind die Vorteile der Hinterschliff-Änderung im Schneidteil voll ausgenutzt und ist die Erzeugung des Gewindes des Gewindebohrers vereinfacht.

Es ist möglich, das Führungsteil mit konstantem Hinterschliff zu versehen. Besonders zweckmäßig und vorteilhaft ist es jedoch, wenn sich auch der Hinterschliff von benachbarten Führungseil-Gewindezähnen- in Längsrichtung gesehen - im Freiwinkel zunehmend oder abnehmend ändert. Dies gibt weitere Möglichkeiten Führung und Reibung je nach den gegebenen Umständen auf verbesserte Weise einzustellen. In der Regel nimmt der Freiwinkel des Hinterschliffs in Richtung zum hinteren Ende der Gewindepartie ab. Dies ergibt eine verbesserte Führung, wenn die Gewindepartie über ihre volle Länge in dem zu bohrenden Werkstoff steckt.

Die Hinterschliff-Änderung des Schneidteiles und des Führungsteiles ist entweder stetig oder stufenweise, wobei pro Stufe zwei oder mehr benachbarte Gewindezähne den gleichen Hinterschliff aufweisen. Unter stufenweiser Änderung wird hier verstanden, daß zwei oder mehr Stufen vorgesehen sind. Die Änderung des Hinterschliffs ist im Ausmaß und der Richtung an den zu bearbeitenden Werkstoff und an den Maschinentyp, an dem der Gewindebohrer eingesetzt wird, angepaßt. Neuzeitliche, NC-gesteuerte Werkzeugmaschinen zur Herstellung des Gewindebohrers lassen eine feinfühlige Änderung des Hinterschliffs zu, indem z.B. die Position der den Hinterschliff erzeugenden Schleifscheibe während der Bearbeitung des Gewindebohrers verändert wird.

Besonders zweckmäßig und vorteilhaft ist es, wenn die Hinterschliff-Änderung Hinterschliffe mit einem Freiwinkel von 5 Minuten bis 2 Grad umfaßt. In der Regel ist also kein hinterschlifffreier Bereich der Gewindepartie vorhanden. Es läßt sich der Hinterschliff bis zu einem ungewöhnlich großen Ausmaß steigern.

Besonders zweckmäßig und vorteilhaft ist es, wenn der Schneidteil-Hinterschliff von vorne nach hinten abnimmt. Dieser Gewindebohrer wird an einer schell laufenden Maschine mit steigungsgerecht geführter Spindel für hochfeste Werkstoffe angewendet. Eine schnell laufende Werkzeugmaschine hat eine Schnittgeschwindigkeit von mehr als 20 m/min und ein hochfesterWerkstoff hat eine Zugfestigkeit von mehr als 900 N/mm². Der Gewindebohrer ist von der Maschine her gut geführt und der materialspanende Bereich des Schneidteiles erzeugt wegen des vergrößerten Hinterschliffs trotz hoher Schnittgeschwindigkeit und hochfestem Werkstoff verringerte Reibung und lehrenhaltige Gewinde.

Besonders zweckmäßig und vorteilhaft ist es andererseits, wenn der Schneidteil-Hinterschliff von vorne nach hinten zunimmt. Dieser Gewindebohrer wird an einer konventionell laufenden Maschine mit nicht steigungsgerecht geführter Spindel für normalharte Werkstoffe angewendet. Eine konventionell laufende Werkzeugmaschine hat eine Schnittgeschwindigkeit unter 20 m/min und ein normalharter Werkstoff hat eine Zugfestigkeit von weniger als 900 N/mm². Der Gewindebohrer ist am vorderen Bereich des Schneidteiles im Werkstoff gut geführt und ein allzugroßes Anwachsen der Reibung ist durch Vergrößerung des Hinterschliffs nach hinten hin vermieden.

In der Zeichnung sind bevorzugte Ausführungsformen der Erfindung dargestellt und zeigt

Fig. 1     eine Seitenansicht eines Gewindebohrers mit Hinterschliff,

Fig. 2     eine schematische Darstellung mehrerer Gewindezähne des Gewindebohrers gemäß Fig. 1,

Fig. 3     schematisch eine Seitenansicht eines ersten Gewindezahnes mit Hinterschliff,

Fig. 4     schematisch eine Seitenansicht eines zweiten Gewindezahnes mit Hinterschliff und

Fig. 5 - 11     jeweils schematisch einen ersten bis siebten Verlauf eines sich entlang einer Gewindepartie ändernden Hinterschliffs.

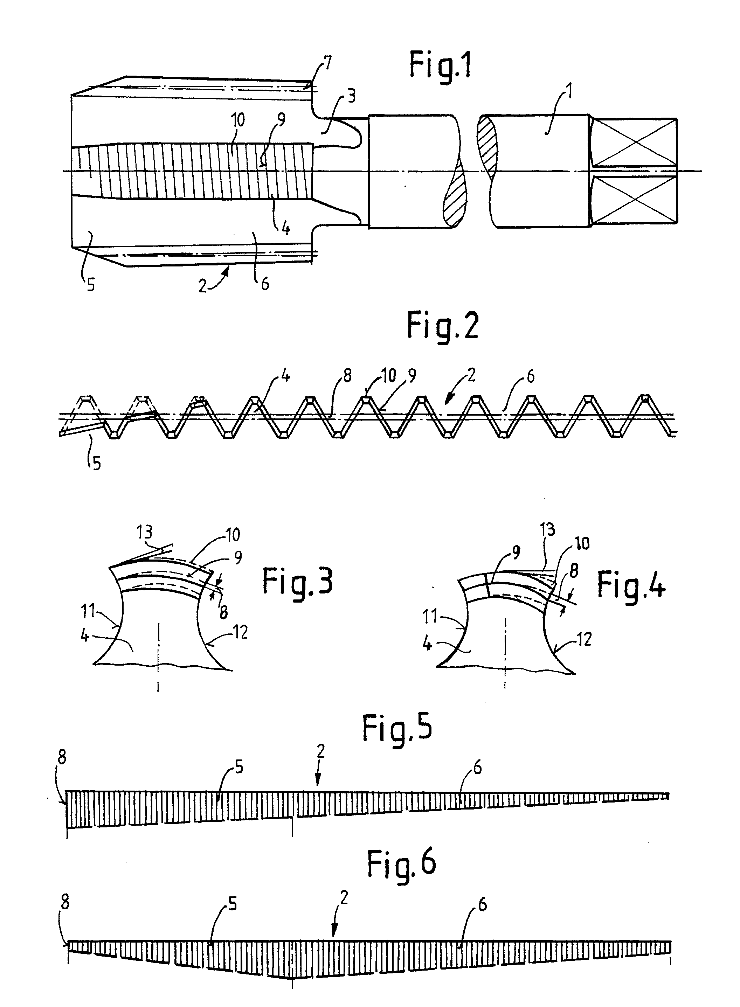

Ein Gewindebohrer gemäß Fig. 1 und 2 trägt an einem Schaft 1 eine im wesentlichen zylindrische Gewindepartie 2, die über die Länge, abgesehen von einer konischen Verjüngung 7, absatzlos ist und gleichbleibenden Flankendurchmesser aufweist. Die Gewindepartie 2 ist mit Nuten 3 versehen, welche die Gewindegänge in Gewindezähne 4 untergliedern. Die Gewindepartie 2 ist, in Längsrichtung gesehen, in ein vorderes, kürzeres Schneidteil 5 und in ein hinteres, längeres Führungsteil 6 untergliedert. Das Schneidteil 5 ist an den vorderen Gewindezähnen konisch angeschliffen, was in Fig. 2 gestrichelt verdeutlicht ist. Die Gewindepartie 2 ist über die gesamte Länge mit einem Hinterschliff 8 versehen, der in Fig. 2 in Höhe des Flankendurchmessers durch zwei Linien angedeutet ist und als Profilhinterschliff sowohl an den Flanken 9 als außen 10 an den Gewindezähnen 4 vorgesehen ist.

In Fig. 3 und 4 sind zwei verschiedene Ausbildungen des Hinterschliffs 8 gezeigt, der eine in Richtung von der Zahn-Vorderseite 11 zur Zahn-Hinterseite 12 größer werdende, den Querschnitt des Zahnes verringernde Materialabtragung ist. Während der Hinterschliff 8 gemäß Fig. 3 an der Zahn-Vorderseite 11 beginnt, beginnt er gemäß Fig. 4 mit Abstand von der Zahn-Vorderseite 11. Der Hinterschliff ergibt einen Freiwinkel 13 zwischen der hinterschliffenen Fläche und der gedachten, vor dem Hinterschleifen vorliegenden Fläche und hat an der Zahn-Hinterseite einen Hub entsprechend der Materialabtragung.

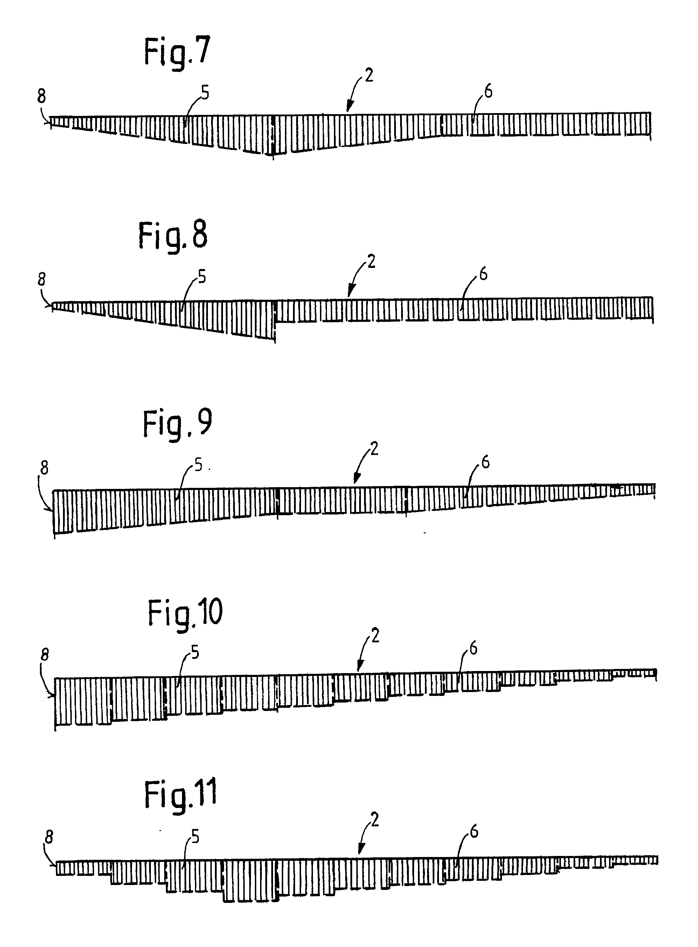

Gemäß Fig. 5 bis 11 ändert sich das Ausmaß des Hinterschliffes 8 über die Länge der Gewindepartie 2. Gemäß Fig. 5 bis 9 ist die Hinterschliff-Änderung jeweils stetig, d.h. eine Zunahme oder Abnahme erfolgt in kleinen Schritten von einem Gewindezahn zum nächsten benachbarten Gewindezahn. Gemäß Fig. 10 und 11 erfolgt die Hinterschliff-Änderung jeweils stufenweise, d. h. an eine Gruppe von Gewindezähnen mit gleichem Hinterschliff schließt sich eine Gruppe von Gewindezähnen mit einem gleichen Hinterschliff an, dessen Ausmaß erheblich vergrößert bzw. verkleinert ist. Die Hinterschliff-Änderungist stets am Schneidteil 5 vorgesehen und ist in der Regel auch am Führungsteil 6 vorgesehen, das jedoch gemäß Fig. 8 auch durchgehend gleichen Hinterschliff aufweisen kann. Der Hinterschliff im Schneidteil 5 nimmt gemäß Fig. 5, 9 und 10 von einem hohen Wert vorne nach hinten hin ab und nimmt gemäß Fig. 6, 7, 8 und 11 von einem niedrigen Wert vorne nach hinten hin zu. Die Änderung muß nicht mit dem Schneidteil 5 enden, sondern kann sich auch auf das Führungsteil 6 erstrecken. Im Führungsteil 6 nimmt der Hinterschliff gemäß der Zeichnung von vorne nach hinten ab, soweit nicht gemäß Fig. 7 und 9 gleichbleibende Bereiche zusätzlich vorgesehen sind.

**Patentansprüche**

1. Gewindebohrer, dessen Gewindepartie ein Schneidteil sowie ein Führungsteil bildet, im wesentlichen zylindrisch ist und an mehreren benachbarten Gewindezähnen des Schneidteiles mit einem Hinterschliff versehen ist, dessen Freiwinkel auf den Gewindezahn mit dem maximalen Flankendurchmesser bezogen ist, **dadurch gekennzeichnet, daß** sich der Hinterschliff (8) der benachbarten Schneidteile (5) - Gewindezähne - in Längsrichtung gesehen -, im Freiwinkel (13) zunehmend oder abnehmend ändert.

2. Gewindebohrer nach Anspruch 1 , **dadurch gekennzeichnet**, daß die Hinterschliff (8)-Änderung sich über die gesamte Länge des Schneidteiles (5) erstreckt.

3. Gewindebohrer nach Anspruch 1 oder 2, wobei an mehreren benachbarten Gewindezähnen des Führungsteiles ein Hinterschliff vorgesehen ist, dessen Freiwinkel auf den Schneidteil-Gewindezahn mit dem maximalen Flankendurchmesser bezogen ist, **dadurch gekennzeichnet**, daß sich auch der Hinterschliff (8) der benachbarten Führungsteil (6)-Gewindezähne - in Längsrichtung gesehen - im Freiwinkel (13) zunehmend oder abnehmend ändert.

4. Gewindebohrer nach Anspruch 1, 2 oder 3, **dadurch gekennzeichnet**, daß die Hinterschliff-Änderung Hinterschliffe (8) mit einem Freiwinkel (13) von 5 Minuten bis 2 Grad umfaßt.

5. Gewindebohrer nach einem der Ansprüche 1 bis 4, **dadurch gekennzeichnet**, daß der Schneidteil (5)-Hinterschliff (8) von vorne nach hinten abnimmt.

6. Gewindebohrer nach einem der Ansprüche 1 bis 4, **dadurch gekennzeichnet**, daß der Schneidteil (5)-Hinterschliff (8) von vorne nach hinten zunimmt.

# Fig.1

# Fig.2

# Fig.3

# Fig.4

# Fig.5

# Fig.6

Fig.7

Fig.8

Fig.9

Fig.10

Fig.11